# EUROPEAN PATENT APPLICATION

(11) **EP 4 799 515 A1**
(43) Date of publication of application: **02.09.2026**
(21) Application number: 26161089.3
(22) Date of filing: 26.02.2026
(51) Int. Cl.: A43B 13/12, A43B 23/02, B29D 35/14

(54) **METHOD FOR MANUFACTURING A FOOTWEAR PART, MANUFACTURING SYSTEM, AND ARTICLE OF FOOTWEAR**

(30) Priority: 28.02.2025 CH 1932025; 28.02.2025 CH 1902025; 28.02.2025 CH 1942025; 19.09.2025 EP 25203432
(71) Applicant: On Clouds GmbH, 8005 Zürich (CH)
(72) Inventor: ORTIZ, Elias Miguel, 8005 Zurich (CH); PAK, Jae-Hwi, 8005 Zurich (CH); KWEON, Namhyung, 8005 Zurich (CH)
(74) Representative: Eichelhardt, Frank Robert

(57) **Abstract**

The invention pertains to a method for manufacturing a footwear part (14) having a footwear element (16), comprising a provisioning step (20) of providing a foamed footwear element precursor (30) and a sealing step (24) of sealing at least one surface area (32) of the foamed footwear element precursor (30) by energy deposition, thereby at least partially forming the footwear element (16). The invention further pertains to a manufacturing system (28) for manufacturing a footwear part (14) having a footwear element (16), comprising an energy depositing unit (34) for energy deposition onto a foamed footwear element precursor (30) to seal at least one surface area (32) of the foamed footwear element precursor (30) for at least partially forming the footwear element (16), and to an article of footwear (12) comprising or being at least partially derived from a footwear part (14).

## Description

### Technical Field

The present invention relates to a method for manufacturing a footwear part, a manufacturing system for manufacturing such a footwear part, and an article of footwear comprising such a footwear part.

### Background

In the footwear industry, and particularly within the field of athletic and performance shoes, the midsole plays a critical role in providing cushioning, energy return, and overall comfort. Conventional midsoles are most commonly produced from polymer-based foams such as ethylenevinyl acetate (EVA), polyurethane (PU), or similar synthetic materials. These foams are widely adopted because they offer a favorable balance of low weight, cushioning performance, and cost-effective manufacturability at scale.

Despite these advantages, current midsole materials are subject to significant limitations. Athletic footwear is routinely exposed to demanding environmental conditions, including moisture, dirt, and repetitive mechanical stresses. Under such conditions, open-cell foams and other porous structures are prone to water absorption, abrasion, contamination, and premature breakdown, which adversely affects their durability and performance. As a result, the industry has largely restricted midsole construction to closed-cell foams, which resist moisture and particulate ingress.

This reliance on closed-cell foams inherently limits material flexibility, manufacturing flexibility and design freedom. Many promising materials, such as open-cell foams or alternative porous structures with potentially superior cushioning, breathability, or sustainability characteristics, remain impractical for midsole use due to their vulnerability in real-world conditions. Consequently, manufacturers face significant barriers in exploring innovative material systems that could advance performance, comfort, or environmental sustainability in footwear.

### Summary

The invention concerns a method for manufacturing a footwear part, having a footwear element, in particular a midsole element, comprising a provisioning step of providing a foamed footwear element precursor and a sealing step of sealing at least one surface area of the footwear element precursor by energy deposition, thereby at least partially forming the footwear element.

The invention further pertains to a manufacturing system for manufacturing a, in particular the aforementioned, footwear part having a, in particular the aforementioned, footwear element, preferably the midsole element, comprising an energy depositing unit for energy deposition onto a, in particular the aforementioned, foamed footwear part precursor to seal at least one, in particular the previously mentioned, surface area of the foamed footwear part precursor, to at least partially form the footwear element.

In addition, the invention pertains to an article of footwear comprising or being at least partially derived from a, in particular the aforementioned, footwear part manufactured using a method as described herein.

The solutions according to the invention enable an improvement in the material properties of footwear parts. In particular, advantageous surface properties of a footwear element can be realized. The at least one surface area of the footwear element can be made particularly abrasion-resistant by means of energy deposition. Also, the at least one surface area can be sealed particularly precisely and easily. This means that more sensitive materials, in particular open-cell foams, can also be used to manufacture the footwear element, the at least one surface area of which can then be specifically sealed in accordance with the invention. This means that a particularly high degree of flexibility can be achieved with regard to the choice of material for manufacturing a footwear part.

The footwear part may be part of the article or may constitute the entire article of footwear. It may also be envisaged that the footwear part may be a precursor of a final footwear part of the article of footwear, wherein the final footwear part may be derived from the footwear part by adding a print and/or at least one additional element, for example a reinforcement element, a design element, or the like to the footwear part. Alternatively or additionally, the final footwear part may also be derived from the footwear part by cutting and/or molding the footwear part. The article of footwear may be a sports shoe, in particular a running shoe, a tennis shoe, or the like, a sneaker, a hiking shoe, or the like. The article of footwear may comprise at least an upper, a sole unit connected to the upper, and possibly a fastening unit for fastening the article of footwear to a wearer's foot. The sole unit preferably comprises an outsole and a midsole and may additionally comprise an insole. The fastening unit may comprise a lacing system, a hook and loop fastener, a zipper, a buckle system, a button closure system, a combination thereof, or the like.

The footwear element may correspond to a, in particular the aforementioned, midsole element. The midsole element may be part of the midsole or form the entire midsole. Alternatively or additionally, the footwear element may be part of or constitute another part of the sole unit, for example the insole and/or the outsole, the upper, and/or the fastening unit. The footwear element may be a foamed element that may for example be configured as a padding element. It may also be envisaged that the footwear element may be configured for cushioning, or the like.

Providing the foamed footwear element precursor may correspond to solely providing the foamed footwear element precursor already previously manufactured, or to providing the foamed footwear element precursor by manufacturing the footwear element precursor, in particular by foaming, preferably by supercritical injection foaming, or the like. The manufacturing system may comprise a foaming unit for providing the foamed footwear element by foaming, preferably supercritical injection foaming or the like. The foamed footwear element precursor may be made partially or entirely from a open-cell foam. Alternatively, the foamed footwear element precursor may be made partially or entirely from a closed-cell foam.

The at least one surface area may be part of or may correspond to an overall surface of the foamed footwear element precursor. The at least one surface area may correspond to a surface of the foamed footwear element precursor that is not covered by any further element of the final footwear part and/or the final article of footwear. In other words, the at least one surface area may, at least partially, be exposed to the environment of the footwear part and/or the article of footwear. In a preferred embodiment, the foamed footwear element precursor may be a midsole element precursor, wherein the surface area may correspond to a lateral surface of the midsole element precursor. The at least one surface area may in particular be different from a surface area of the foamed footwear element precursor that may for example me heated, softened and/or melted to be connected and covered by an upper element or any other element of the final footwear part, in particular of the final article of footwear. Alternatively, the foamed footwear element precursor may for example be a padding element or the like, that may be part of the upper.

Sealing of the at least one surface area may be configured to improve the surface properties of the at least one surface area, in particular with regard to abrasion resistance. Partially forming the footwear element by sealing the at least one surface area may be understood such that the foamed footwear element precursor is further processed to form the footwear element, for example by adding a print and/or at least one additional element, for example a reinforcement element, a design element, or the like to the foamed footwear element precursor, and/or by cutting and/or molding the foamed footwear element precursor. In a preferred embodiment, the footwear element is provided entirely by sealing the at least one surface area of the foamed footwear element precursor.

Sealing in the sealing step may comprise applying at least one embellishment to the foamed footwear element precursor by energy deposition, in particular by laser treatment. Thus, the at least one embellishment may enhance abrasion resistance of the footwear element.

The energy deposition may be configured to heat the at least one surface area, preferably for sealing the at least one surface area. "Energy deposition" may be different from conduction and/or convection, and/or different from coating, except plasma coating. A pre-conditioning of the at least one surface area for connecting to an upper element of the footwear part or the article of footwear or any other footwear element of the footwear part or the article of footwear may be understood to be different from an energy deposition to seal the at least one surface area.

A morphology of the at least one surface area may be modified by the energy deposition to seal the at least one surface area. A reliable sealing of the at least one surface area can be realized.

In other words, a microstructure of the at least one surface area may be modified by the energy deposition to seal the at least one surface area, wherein only uppermost micrometer layers may be modified. Preferably, the at least one surface area may be melted at least partially to seal the at least one surface area. Alternatively or additionally, the at least one surface area may be sealed by plasma polymerization, plasma-assisted physical vapor deposition, plasma-assisted chemical vapor deposition, or the like. "Sealing" in the context of the invention may be different from covering the at least one surface area by adding an additional layer, for example a foil, a coating, or the like.

The energy deposition may at least partially be provided by irradiation. This allows energy deposition to be particularly precise and controlled. The at least one surface area can be sealed particularly reliably and effectively. "At least partially" with regard to providing the energy deposition may correspond to at least 10 %, or to at least 25 %, or to at least 50 %, or to at least 75 %, or to at least 90 % of the total energy deposited or to the total energy deposited.

The morphology of the at least one surface area may be modified by irradiation to seal the at least one surface area. For example, the at least one surface area may be heated by irradiation to seal the at least one surface area, in particular by modifying the morphology of the at least one surface area.

The irradiation may at least partially be provided by electromagnetic radiation. The energy can be deposited particularly fast, selective, and efficiently.

The manufacturing system, in particular the energy depositing unit, may comprise an irradiation unit for the energy deposition by irradiation. The irradiation unit may be configured to provide electromagnetic radiation for the energy deposition. The at least one surface area may be sealed partially or entirely by electromagnetic radiation. Preferably, the morphology of the at least one surface area may be adjusted to seal the at least one surface area partially or entirely by electromagnetic radiation, in particular by heating the at least one surface area by electromagnetic radiation. "At least partially" with regard to providing the irradiation may correspond to at least 10 %, or to at least 25 %, or to at least 50 %, or to at least 75 %, or to at least 90 % of the total irradiation or to the total irradiation.

The electromagnetic radiation may at least partially be provided by laser light. This enables particularly precise energy deposition and the desired surface modification of the at least one surface area can be achieved particularly reliably.

The irradiation unit may comprise a laser unit to provide the laser light for sealing the at least one surface area. The laser unit may comprise a carbon-dioxide laser, a Nd:YAG laser, an excimer laser, a combination thereof, or the like. The laser may be configured to provide electromagnetic radiation with a wavelength of at least 200 nm, or at least 500 nm, or at least 1000 nm, or at least 10 µm. For example, the laser unit may be configured to provide electromagnetic radiation with a wavelength of 248 nm, or 532 nm, or 1064 nm, or 10,6 µm, a combination thereof, or the like. The laser unit may be configured to provide electromagnetic radiation with a surface energy density between 0,05 J/cm² and 5 J/cm². The laser unit may be configured to operate with pulses in the millisecond, microsecond, and/or nanosecond range. It may also be envisaged that the laser unit may be configured to operate in continuous-wave mode.

Alternatively or additionally, the irradiation may at least partially be provided by ultrasound. A spatially targeted, finely controllable and contactless heating to seal the at least one surface area can be achieved.

The irradiation unit may be configured to provide ultrasonic radiation for depositing energy to seal the at least one surface area. Alternatively or additionally, the irradiation may also be provided at least partially by microwave radiation, infrared radiation, or the like, and/or particle radiation, for example by an electron beam.

The energy deposition may at least partially be provided by plasma treatment. This means that the surface of temperature-sensitive materials can also be reasonably well sealed. Special functional groups can be incorporated into the at least one surface area and thus the properties of the at least one surface area can be adapted.

The manufacturing system, in particular the energy depositing unit, may comprise a plasma unit for providing the plasma treatment to seal the at least one surface area. The plasma treatment may be different from a plasma treatment to electrostatically charge the at least one surface area and/or different from pre-conditioning the at least one surface area for the connection to the upper element or any other footwear element.

In some embodiments, the sealing step may be conducted using a conveyor unit of the manufacturing system. Herein, a plurality of foamed footwear element precursors may be provided one after another in the provisioning step, preferably by molding, and may be transferred to the conveyor unit so as to be arranged successively with respect to a conveying direction of the conveyor unit. Sealing of the foamed footwear element precursors may be done one after another as the conveyor unit transports the foamed footwear element precursors consecutively to the energy depositing unit.

Alternatively or additionally, the method may comprise an attachment step of attaching the foamed footwear element precursor to a footwear last. Advantageously, the foamed footwear element precursor can be handled particularly easily via the footwear last.

For example, the foamed footwear element precursor may be held mechanically, magnetically, adhesively, electrostatically, by a negative pressure, a combination thereof, or the like, detachably at the footwear last, in particular a footwear element contact surface of the footwear last. The footwear element contact surface may refer to a surface of the footwear last on which the foamed footwear element precursor or the footwear element rests when attached to the footwear last, in particular at least during manufacturing. The footwear element contact surface may be part of or constitute a footwear part contact surface of the footwear last. The footwear part contact surface may particularly refer to a surface of the footwear last on which the footwear part rests after being manufactured and before being separated from the footwear last, for example by means of a handling unit of the manufacturing system and/or manually.

The handling unit may may be implemented as or may comprise a robotic handler or the like. The handling unit may be configured for automatically attaching the foamed footwear element precursor to the footwear last. The handling unit may be connected to the footwear last, preferably for moving and/or transporting the footwear last during manufacturing of the footwear part. The handling unit may be connected to the footwear last prior to, simultaneously, or after the foamed footwear element precursor is attached to the footwear last.

The sealing step may be repeatedly performed. Accordingly, the sealing step may be performed at least 2, 3, 4, 5, 6 or more times. The repeated performing of the sealing step may be implemented such that the sealing step is directly followed by a further sealing step. However, in some embodiments, a pause and/or a further method step may be implemented between the sealing step and a further sealing step, thereby facilitating cooling of the at least one surface area between the sealing steps. Such a further method step may comprise an application step, as will be set out in the following. Repeated performing of the sealing step may improve the surface quality, in particular the abrasion resistance, of the at least one surface area.

Repeated performing of the sealing step may be particularly beneficial in the case of plasma treatment. In a preferred embodiment, plasma treatment is repeated at least two and at most five times, preferably three times. Tests have shown that a low number of repeated sealing steps, for example three times plasma treatment, leads to a high abrasion-resistance of the at least one surface area. However, a high number of repeated sealing steps can lead to even reduced abrasion-resistance. For example, six times plasma treatment may lead to a lower abrasion-resistance than three times plasma treatment.

The sealing step may be performed after the attachment step. This makes it particularly easy to control the relative position between the foamed footwear element precursor and the energy deposition unit for energy deposition via the footwear last.

The handling unit may be configured to control a relative position and/or movement of the foamed footwear element precursor and the energy deposition unit at least during the sealing step for sealing the at least one surface area, for example by moving the foamed footwear element precursor and/or the energy depositing unit at least partially. It may be envisaged that the handling unit may be configured to move the foamed footwear element by moving the footwear last, preferably during the sealing step for sealing the at least one surface area. Preferably, by the relative position and/or movement of the energy depositing unit and the foamed footwear element precursor, an area of the foamed footwear element precursor to be sealed, in particular the at least one surface area, can be defined.

The method may further comprise an application step of applying a thermoplastic filament onto a footwear last to form a plurality of path segments, in particular loops, on the footwear last along an application path for forming at least one, in particular the aforementioned, upper element of the footwear part. This means that the at least one upper element can be applied in a targeted manner as well as precisely and easily bonded to the foamed footwear element precursor.

The at least one upper element may be part of the upper or form the entire upper. The thermoplastic filament may be a polymer composition. The polymer composition may comprise, for example, polyester, polyamide, polyether block amide (PEBA), for example PEBAX^{®} (Arkema), thermoplastic polyurethane (TPU), such as Desmopan^{®} 2790A or Desmopan^{®} 9392A (Covestro), ethylene vinyl acetate (EVA), polyolefin, such as polyethylene or polypropylene, or mixtures thereof. The thermoplastic filament may contain one or more additives, like pigments, foaming agents, crosslinking agents, etc.

The thermoplastic filament may be provided by the manufacturing system, in particular a filament output unit of the manufacturing system. The filament output unit may be configured to spray the thermoplastic filament. The term "spraying" in this context means that the thermoplastic filament travels through air, for example over a distance of at least 2 cm, at least 5 cm, or at least 10 cm, before being deposited and forming the at least one upper element. Spraying the thermoplastic filament as disclosed herein is not to be confused with 3D printing, which is a completely different process. The at least one upper element made from the thermoplastic filament may have a porous, yet non-foamy, and/or fibrous structure, in particular contrary, for example, to a upper element manufactured by 3D printing and/or by molding and possibly by subsequent foaming.

The filament output unit may comprise a dosing unit, a melting unit, and/or a nozzle unit. An example of such a filament output unit is disclosed in WO 2022/069583 A1.

The filament output unit may be configured to process a filament raw material, e.g. a polymeric material or the like, in order to provide the thermoplastic filament. The melting unit may be configured to melt the filament raw material, which may then be used to manufacture the at least one upper element. The melting unit may include an extruder, with the extruder possibly having a barrel and a screw. The screw may be arranged inside the barrel. The melting device may also include an output material heating unit. The filament raw material may be melted by the output material heating unit. By means of the nozzle unit the molten filament raw material may be dispensed as the thermoplastic filament.

The filament raw material may comprise a polymer composition, that may comprise, for example, polyester, polyamide, polyether block amide (PEBA), for example PEBAX^{®} (Arkema), thermoplastic polyurethane (TPU), such as Desmopan^{®} 2790A or Desmopan^{®} 9392A (Covestro), ethylene vinyl acetate (EVA), polyolefin, such as polyethylene or polypropylene, or mixtures thereof. The filament raw material may contain one or more additives, like pigments, foaming agents, crosslinking agents, etc.

The dosing unit may comprise a pump, a pump drive and a dosing head. The pump may be configured to generate pressure for dispensing the molten filament raw material as the thermoplastic filament, in particular through the nozzle unit. The pump may be configured to control, in particular fine tune, the output pressure of the molten filament raw material through the nozzle unit. Alternatively, the filament output unit may be implemented without a pump to generate pressure for dispensing the thermoplastic filament, wherein the thermoplastic filament may be dispensed by means of the extruder and preferably sprayed as the thermoplastic filament.

The nozzle unit may comprise at least one gas outlet opening, through which a flow of gas, in particular compressed air, may be output. The flow of gas may be provided to influence the filament emerging from the nozzle unit. Preferably, the nozzle unit is designed in such a way that a helical filament is produced. This helical shape of the filament may be generated by a corresponding application of gas flow from several gas outlet openings. The gas outlet openings may be arranged around a filament outlet of the nozzle unit, in particular at a uniform distance and preferably in a circular arrangement. Preferably, a gas outlet direction of the at least one gas outlet opening extends at an angle to a filament dispense direction of the nozzle unit. Alternatively, the nozzle unit may also be rotated to create the helical shape of the filament.

The thermoplastic filament may be applied, in particular sprayed, onto the footwear last for manufacturing, and preferably shaping, the at least one upper element.

The handling unit may be configured to control an application path for applying the thermoplastic filament onto the footwear last. The application path preferably refers to a relative movement path of the nozzle unit with regard to the footwear last. The handling unit may be configured to generate a relative movement of the footwear last with respect to the filament output unit, in particular the nozzle unit. For example, the handling unit may be, preferably detachably, connected to the footwear last to move it during the application step. Alternatively or additionally, the handling unit may be connected to the nozzle unit or may also be part of the filament output unit to move the nozzle unit.

The thermoplastic filament may be formed as a plurality of path segments, preferably in the form of loops, to produce the at least one upper element. In other words, the filament forming the at least one upper element may be arranged in a looped manner having several intersecting turns and forming several layers one on top of the other. Such structure is, for example, disclosed in WO 2022/069583 A1.

Alternatively, the thermoplastic filament may at least partially or entirely be formed as a wadding. Herein, a "wadding" may be understood as a structure in which the thermoplastic filament is in a disordered state and may take up a higher volume compared to an ordered state of the thermoplastic filament, where the thermoplastic filament may be present as a plurality of path segments, preferably in the form of loops. Such wadding may be obtained by an increased distance between the nozzle unit and the footwear last during application of the thermoplastic filament compared to a distance between the nozzle unit and the footwear last while applying the thermoplastic filament in the form of the plurality of path segments, in particular loops.

The footwear last may be set up to shape the at least one upper element. For example, the footwear last may have a surface, in particular an upper element contact surface, that may be configured to define the shape of the at least one upper element. For example, the at least one upper element may be shaped by applying it to the surface, in particular the upper element contact surface, of the footwear last. The upper element contact surface may particularly refer to a surface of the footwear last on which the at least one upper element rests after being applied to the footwear last. The upper element contact surface may be part of the footwear part contact surface.

During the application step the thermoplastic filament may at least partially be applied onto the foamed footwear element precursor or the footwear element. Thus, the at least one upper element can be directly connected to the foamed footwear element precursor or the footwear element. At least a part of the foamed footwear element precursor can be covered by the at least one upper element and thus protected, so that the size of the area of the foamed footwear element precursor to be sealed can be kept small.

Preferably, the thermoplastic filament forming the at least one upper element is at least partially applied onto the foamed footwear element precursor, in particular for connecting the at least one upper element to the foamed footwear element precursor. Connecting the at least one upper element to the foamed footwear element precursor may be performed while shaping the at least one upper element. The thermoplastic filament may be applied onto an upper edge area of the foamed footwear element precursor for connecting the at least one upper element to the foamed footwear element precursor.

The sealing step may be performed after the application step. This can prevent the surface of the foamed footwear element precursor from being negatively influenced with regard to its bonding properties with the at least one upper element. In addition, the at least one surface area of the foamed footwear element precursor to be sealed can easily be defined, so that, for example, automation of the sealing process can also be simplified.

The at least one surface area may be sealed after the at least one upper element has been formed in the application step.

Additionally or alternatively, the sealing step may be performed prior to and/or simultaneously to the application step. Advantageously, a particularly reliable seal of the at least one surface area, in particular due to a seamless protection of the at least one surface area especially in the transition area to the at least one upper element, can be achieved. The sealing process can be controlled particularly easily if the sealing step is carried out prior to the application step. If the sealing step and the application step are carried out simultaneously, a particularly fast manufacturing process can be realized.

The at least one surface area may be sealed by energy deposition prior to and/or simultaneously to the application of the thermoplastic filament to form the at least one upper element.

The methods, elements and articles disclosed herein are not intended to be limited to the application and embodiment described above. In particular, they may have a number of individual elements, components and units as well as process steps deviating from a number specified herein in order to fulfill a mode of operation described herein. In addition, in the case of value ranges specified in this disclosure, values lying within the specified limits are also to be regarded as disclosed.

In particular, it is pointed out that all features, properties and methods described in relation to an element, or an article are transferable mutatis mutandis to methods and can be used in the sense of the invention and are deemed to be co-disclosed. The same applies in the opposite direction. This means that structural features mentioned in relation to methods can also be taken into account and claimed within the scope of device claims and can also be counted as part of the disclosure.

In the following, the present invention is described by way of example with reference to the accompanying figures. The drawing, the description and the claims contain numerous features in combination. The skilled person will also usefully consider the features individually and use them sensibly in combination in the context of the claims.

If there is more than one example of a particular object, only one of them may be provided with a reference sign in the figures and in the description. The description of this specimen can be transferred accordingly to the other specimens of the object. If objects are named in particular by means of numerical words, such as first, second, third object, etc., these are used to name and/or assign objects. Accordingly, for example, a first object and a third object, but no second object, can be included. However, a number and/or sequence of objects could also be derived from numerical words.

### Brief description of the drawings

Embodiments of the present disclosure will now be described by way of example only and with reference to the following accompanying drawings.
Figure 1 contains a schematic representation of a manufacturing system for manufacturing a footwear part.
Figure 2 shows an article of footwear comprising the footwear part manufactured using the manufacturing system in a perspective view.
Figure 3 depicts a diagram of a method for manufacturing the footwear part.

### Detailed Description

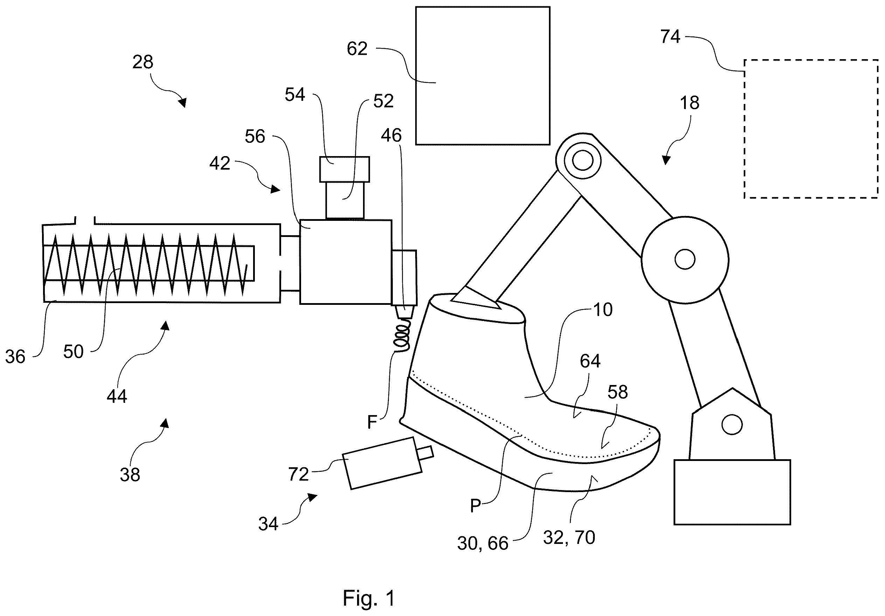

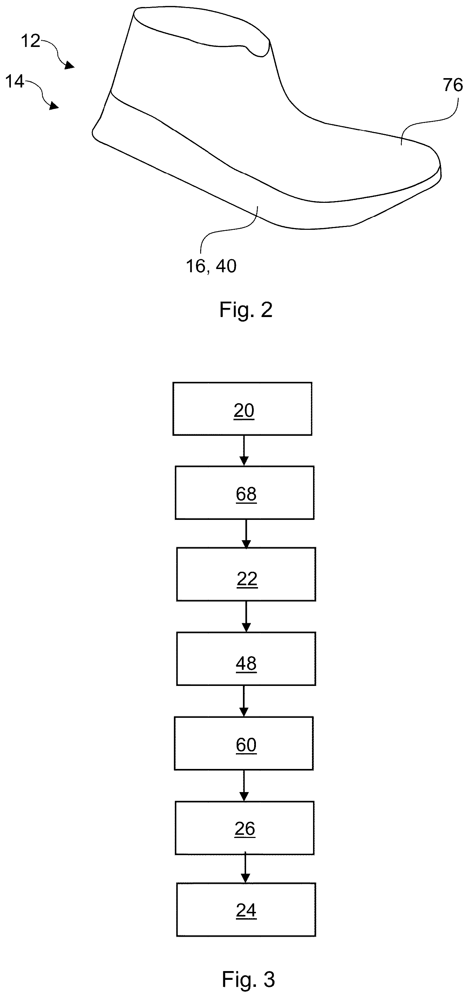

Figure 1 shows a schematic overview of a manufacturing system 28 for manufacturing a footwear part 14. The footwear part 14 is part of an article of footwear 12. The article of footwear 12 is depicted in Figure 2 and is implemented as a running shoe.

The footwear part 14 comprises a footwear element 16 and an upper element 76. The footwear element 16 is a midsole element 40. The midsole element 40 forms a midsole of the article of footwear 12. The upper element 76 forms an upper of the article of footwear 12. The article of footwear 12 comprises an outsole (not shown here) that is attached to the midsole element 40.

The upper element 76 is made from a sprayed thermoplastic filament F. The thermoplastic filament F is a polymer composition. The polymer composition is a thermoplastic polyurethane, such as Desmopan^{®} 2790A or Desmopan^{®} 9392A (Covestro). The thermoplastic filament F of the upper element 76 comprises a plurality of path segments in the form of intersecting loops (not shown here).

The thermoplastic filament F is provided by a filament output unit 38 of the manufacturing system 28. The filament output unit 38 is configured to apply, in particular spray, the thermoplastic filament F onto a footwear last 10 of the manufacturing system 28 for shaping the upper element 76 thereon. The filament output unit 38 comprises a dosing unit 42, a melting unit 44 and a nozzle unit 46.

The melting unit 44 is configured to melt a filament raw material that is a polymer composition, e.g. a thermoplastic polyurethane, which is then used to manufacture the upper element 76. The melting unit 44 comprises an extruder having a barrel 36 and a screw 50. The screw 50 is arranged in the barrel 36. For melting the filament raw material, the melting unit 44 comprises an output material heating unit (not shown).

The nozzle unit 46 is configured to dispense the molten filament raw material. The dosing unit 42 comprises a pump 52, a pump drive 54 to drive the pump 52 and a dosing head 56. The pump 52 generates pressure for dispensing the molten filament raw material as the thermoplastic filament F through the nozzle unit 46. The pump 52 is configured to control, in particular fine tune, the output pressure of the molten filament raw material through the nozzle unit 46. The nozzle unit 46 comprises a plurality of gas outlet openings (not shown here), through which a flow of gas, in particular compressed air, is output. The flow of gas output by the gas outlet openings is used to influence the filament F emerging from the nozzle unit 46 to form a helical shaped filament F.

The filament output unit 38 and the method of forming the helical shaped filament F is disclosed in more detail in WO 2022/069583 A1.

The manufacturing system comprises a handling unit 18. The handling unit 18 is detachably attached to the footwear last 10. The handling unit 18 is configured to move the footwear last 10. The handling unit 18 is configured to control an application path P for applying, in particular spraying, the thermoplastic filament F onto the footwear last 10 to form the upper element 76. The handling unit 18 is configured to generate a relative movement of the footwear last 10 and the filament output unit 38, in particular the nozzle unit 46. The handling unit 18 is detachably connected to the footwear last 10 to create the relative movement during application of the thermoplastic filament F onto the footwear last 10 for forming the upper element 76. The handling unit 18 is implemented as a robotic handler.

By applying the upper element 76 onto an upper element contact surface 58 of the footwear last 10 a shape of the upper element 76 can be defined. The upper element contact surface 58 refers to a surface of the footwear last 10 on which the upper element 76 rests after being applied to the footwear last 10.

The footwear last 10 comprises a footwear part contact surface 64. The upper element contact surface 58 is part of the footwear part contact surface 64. The footwear part contact surface 64 refers to a surface of the footwear last 10 on which the footwear part 14, i.e. the upper element 76 and the midsole element 40, rests after being manufactured and before being separated from the footwear last 10, for example by means of the handling unit 18 and/or manually.

In Figure 1, the footwear last 10 is detachably connected to a foamed footwear element precursor 30 that is further processed in a sealing step 24 to form the footwear element 16, in particular the midsole element 40. The footwear last 10 is detachably connected to the foamed footwear element precursor 30 prior to applying the filament F to the footwear last 10 to form the upper element 76. The foamed footwear element precursor 30 is for example mechanically, magnetically, adhesively, electrostatically, by a negative pressure, a combination thereof, or the like, detachably held at the footwear last 10, in particular on a midsole contact surface (not shown here) of the footwear last 10. The midsole contact surface is part of the footwear part contact surface 64 and refers to a surface of the footwear last 10 on which the midsole element 40 or the foamed footwear element precursor 30 rests when attached to the footwear last 10 at least during manufacturing, in particular during the application of the thermoplastic filament F for forming the upper element 76. The handling unit 18 is also configured to move the footwear last 10 during the manufacturing process between different manufacturing stations of the manufacturing system 28. The filament output unit 38 is one such manufacturing station.

The filament output unit 38 is configured for applying at least part of the upper element 76 onto the foamed footwear element precursor 30 to connect the upper element 76 to the foamed footwear element precursor 30.

The manufacturing system 28 comprises a heating chamber 62. The heating chamber 62 is one of the previously mentioned manufacturing stations of the manufacturing system 28. A printer unit to apply a print to the footwear part and/or a plasma unit to treat the footwear part are possible further manufacturing stations of the manufacturing system 28 (not shown here). The heating chamber 62 is configured to heat the footwear last 10 and/or the foamed footwear element precursor 30 prior to application of the upper element 76 onto the foamed footwear element precursor 30 and the footwear last 10.

The heating of the midsole element 40 in the heating chamber 62 is configured to soften and/or melt at least sections of the midsole element 40 for connecting the upper element 76 to the midsole element 40 when the upper element 76 is applied onto the footwear last 10.

Figure 3 shows a schematic sequence of a method for manufacturing the footwear part 14.

The method comprises a provisioning step 20 of providing the foamed footwear element precursor 30. The foamed footwear element precursor 30 is a midsole element precursor 66. For example, the foamed footwear element precursor 30 is previously manufactured by supercritical injection foaming. Alternatively, the method may also comprise the manufacture of the foamed footwear element precursor 30, preferably by supercritical injection foaming.

In a step 68 of the method, the handling unit 18 connects to the footwear last 10 for conveying the footwear last 10 between the various manufacturing stations of the manufacturing system 28.

In an attachment step 22, the foamed footwear element precursor 30 is attached to the footwear last 10 and held at the footwear last 10 detachably as described above for example mechanically, magnetically, adhesively, electrostatically, by a negative pressure, a combination thereof, or the like.

In a heating step 48, the footwear last 10 and the attached foamed footwear element precursor 30 are transported to the heating chamber 62 by means of the handling unit 18 and are heated in the heating chamber 62. Alternatively, it may be envisaged that only the footwear last 10 or only the foamed footwear element precursor 30 are heated in the heating chamber 62.

The method comprises a transport step 60 of moving the footwear last 10 with the attached foamed footwear element precursor 30 to the filament output unit 38 using the handling unit 18.

In a step, in particular in an application step 26, the thermoplastic filament F is applied onto the footwear last 10 to form the plurality of path segments, in particular loops, on the footwear last 10 along the application path P for forming the upper element 76 in particular as described above. The upper element 76 is shaped on the footwear last 10a by the application of the thermoplastic filament F onto the upper element contact surface 58.

During the application step 26 the thermoplastic filament F is at least partially applied onto the foamed footwear element precursor 30. Herein, the upper element 76 is connected to the foamed footwear element precursor 30. Connecting the upper element 76 to the foamed footwear element precursor 30 is performed while shaping the upper element 76. For this purpose, the thermoplastic filament F is applied also onto the foamed footwear element precursor 30, in particular onto an upper edge area of the foamed footwear element precursor 30, for connecting the upper element 76 to the foamed footwear element precursor 30.

The method comprises a, in particular the aforementioned, sealing step 24 of sealing a surface area 32 of the foamed footwear element precursor 30 by energy deposition, thereby forming the footwear element 16.

The surface area 32 is part of an overall surface of the foamed footwear element precursor 30. The surface area 32 corresponds to a surface of the foamed footwear element precursor 30 that is not covered by any further element of the final footwear part 14 or the final article of footwear 12. The surface area 32 is exposed to the environment of the footwear part 14, in particular of the article of footwear 12. The surface area 32 corresponds to a lateral surface 70 of the midsole element precursor 66.

The energy deposition is configured to heat the surface area 32, preferably to seal the at least one surface. A morphology of the surface area 32 is modified by the energy deposition to seal the surface area 32. The surface area 32 is melted at least partially to seal the surface area 32.

The manufacturing system comprises an energy depositing unit 34 for the energy deposition onto the foamed footwear element precursor 30 to seal the surface area 32 for forming the footwear element 16. The energy deposition is provided by irradiation. The energy deposition is provided by electromagnetic radiation. The energy depositing unit 34 comprises an irradiation unit 72 for the energy deposition by irradiation. The irradiation unit 72 is configured to provide electromagnetic radiation for the energy deposition. The surface area 32 is sealed by electromagnetic radiation. The morphology of the surface area 32 is adjusted to seal the surface area 32 by electromagnetic radiation, in particular by heating the surface area 32 by electromagnetic radiation. The electromagnetic radiation is provided by laser light. The irradiation unit 72 comprises a laser unit to provide the laser light for sealing the surface area 32.

Alternatively or additionally, the irradiation may at least partially provided by ultrasound. The irradiation unit 72 may be configured to provide ultrasonic radiation for depositing energy to seal the surface area 32.

Alternatively or additionally, the energy deposition may at least partially provided by plasma treatment. The energy depositing unit 34 may comprise a plasma unit 74 for providing the plasma treatment to seal the surface area 32. The foamed footwear element precursor 30 may be transported to the plasma unit 74, preferably by means of the handling unit 18, for the energy deposition by plasma treatment. Alternatively it may also be envisaged that the plasma unit 74 is portable and may be moved, preferably by means of the handling unit 18, to deposit energy by plasma treatment.

The sealing step 24 is performed after the attachment step 22. The sealing step 24 is performed after the application step 26. Alternatively or additionally, the sealing step 24 may be performed prior to and/or simultaneously to the application step 26.

Various modifications to the embodiments described are possible and will occur to those skilled in the art without departing from the invention, which is defined by the following claims.

### List of reference symbols

- 10: footwear last
- 12: article of footwear
- 14: footwear part
- 16: footwear element
- 18: handling unit
- 20: provisioning step
- 22: attachment step
- 24: sealing step
- 26: application step
- 28: manufacturing system
- 30: foamed footwear element precursor
- 32: surface area
- 34: energy depositing unit
- 36: barrel
- 38: filament output unit
- 40: midsole element
- 42: dosing unit
- 44: melting unit
- 46: nozzle unit
- 48: heating step
- 50: screw
- 52: pump
- 54: pump drive
- 56: dosing head
- 58: upper element contact surface
- 60: transport step
- 62: heating chamber
- 64: footwear part contact surface
- 66: midsole element precursor
- 68: step
- 70: lateral surface
- 72: irradiation unit
- 74: plasma unit
- 76: upper element
- F: thermoplastic filament
- P: application path

## Claims

1. A method for manufacturing a footwear part (14) having a footwear element (16), in particular a midsole element (40), comprising:
- a provisioning step (20) of providing a foamed footwear element precursor (30); and
- a sealing step (24) of sealing at least one surface area (32) of the foamed footwear element precursor (30) by energy deposition, thereby at least partially forming the footwear element (16).

2. The method according to claim 1,
wherein a morphology of the at least one surface area (32) is modified by the energy deposition to seal the at least one surface area (32).

3. The method according to claim 1 or 2,
wherein the energy deposition is at least partially provided by irradiation.

4. The method according to any one of the preceding claims,
wherein the irradiation is at least partially provided by electromagnetic radiation.

5. The method according to any one of the preceding claims,
wherein the electromagnetic radiation is at least partially provided by laser light.

6. The method at least according to any one of the preceding claims,
wherein the irradiation is at least partially provided by ultrasound.

7. The method according to any one of the preceding claims,
wherein the energy deposition is at least partially provided by plasma treatment.

8. The method according to any one of the preceding claims, further comprising:
- an attachment step (22) of attaching the foamed footwear element precursor (30) to a footwear last (10).

9. The method according to claim 8,
wherein the sealing step (24) is performed after the attachment step (22).

10. The method according to any one of the preceding claims, further comprising:
- an application step (26) of applying a thermoplastic filament (F) onto a footwear last (10) to form a plurality of path segments, in particular loops, on the footwear last (10) along an application path P for forming at least one upper element (76) of the footwear part (14).

11. The method according to claim 10,
wherein during the application step (26) the thermoplastic filament (F) is at least partially applied onto the foamed footwear element precursor (30).

12. The method according to claim 10 or 11,
wherein the sealing step (24) is performed after the application step (26).

13. The method according to claim 10 or 11,
wherein the sealing step (24) is performed prior to and/or simultaneously to the application step (26).

14. A manufacturing system (28) for manufacturing a footwear part (14) having a footwear element (16), in particular a midsole element (40), comprising:
- an energy depositing unit (34) for energy deposition onto a foamed footwear element precursor (30) to seal at least one surface area (32) of the foamed footwear element precursor (30) for at least partially forming the footwear element (16).

15. An article of footwear (12) comprising or being at least partially derived from a footwear part (14) manufactured using a method according to any one of the claims 1 to 13.
